# EUROPÄISCHE PATENTSCHRIFT

(11) **EP 2 522 881 B1**
(45) Veröffentlichungstag und Bekanntmachung des Hinweises auf die Patenterteilung: **02.07.2014**
(21) Anmeldenummer: 12003042.4
(22) Anmeldetag: 02.05.2012
(51) Int. Cl.: F16H 25/06

(54) **Getriebe zur Übertragung eines Drehmoments**
Torque transmitting gearing
Engrenage de transmission de couple

(30) Priorität: 11.05.2011 DE 102011101131
(43) Veröffentlichungstag der Anmeldung: 14.11.2012
(73) Patentinhaber: SMS Meer GmbH, 41069 Mönchengladbach (DE)
(72) Erfinder: Wengenroth, Volker, 40723 Hilden (DE)
(74) Vertreter: Grosse, Wolf-Dietrich Rüdiger

(56) Entgegenhaltungen:
- DE-A1- 19 941 012
- FR-A5- 2 082 558
- US-B1- 6 314 826

## Beschreibung

Die Erfindung betrifft ein Getriebe zur Übertragung eines Drehmoments von einem Antriebselement auf ein Abtriebselement, wobei das Antriebselement und das Abtriebselement um eine gemeinsame Drehachse rotieren, wobei das Antriebselement und das Abtriebselement in einem Gehäuse drehbar gelagert sind, wobei das Antriebselement mindestens eine radial außen liegende Umfangsfläche aufweist, die eine Kulissenbahn für mindestens einen ersten Abschnitt einer Anzahl an Übertragungselementen bildet, wobei das Abtriebselement mindestens eine radial innen liegende Fläche aufweist, die mit einer Anzahl gleichmäßig über den Umfang verteilt angeordneter Vertiefungen versehen ist, die eine Kontaktfläche für mindestens einen zweiten Abschnitt der Übertragungselemente bilden, wobei die Übertragungselemente radial verschieblich in Führungsnuten mindestens eines Halteelements angeordnet sind, das ortsfest an oder in dem Gehäuse angeordnet ist, wobei die Anzahl von Übertragungselementen und die Anzahl von Vertiefungen ungleich sind, wobei jedes Übertragungselement eine sich in Richtung der Drehachse erstreckende Welle umfasst, wobei der mindestens eine erste Abschnitt und der mindestens eine zweite Abschnitt des Übertragungselements in Richtung der Drehachse nebeneinander angeordnet sind, und wobei jedes Übertragungselement symmetrisch zu einer Mittenebene ausgebildet ist, die senkrecht auf der Drehachse steht.

Ein Getriebe dieser Art ist durch die US 63 14 826B1 bekannt geworden. Im Stand der Technik sind weitere Getriebe in verschiedenster Ausgestaltung beschrieben, mit denen ein Drehmoment übertragen werden kann. Dabei wird in den meisten Fällen angestrebt, dass das Getriebe ein Übersetzungsverhältnis aufweist, mit dem das Verhältnis der Drehgeschwindigkeit zwischen der Antriebswelle und der Abtriebswelle verändert werden kann.

Bei klassischen Stirnradgetrieben ergibt sich bei der Drehmomentübertragung auf den Zahnflanken der beteiligten Zahnräder eine Linienberührung. Ein großes Übersetzungsverhältnis kann meist nur durch mehrere Stirnradstufen realisiert werden. Bei einem Schneckengetriebe, das in vorteilhafter Weise hohe Übersetzungsverhältnisse erlaubt, ergibt sich bei der Momentenübertragung eine Punktberührung zwischen Schneckenrad und Schnecke, was das übertragbare Drehmoment begrenzt. Bekannt sind des weiteren Getriebe mit koaxialer An- und Abtriebswelle, die als sog. Cyclo-Getriebe oder Harmonic-Drive-Getriebe bezeichnet werden. Von Vorteil ist hier, dass große Übersetzungsverhältnisse erreicht werden können. Allerdings ist nur die Übertragung relativ geringer Drehmomente möglich.

In vielen maschinenbautechnischen Anwendungen gilt es, hohe Drehmomente bei großen Getriebeübersetzungen zu übertragen. Dies soll auch bei stoßartiger Belastung möglich sein und nicht zu hohem Verschleiß im Getriebe führen. Die genannten vorbekannten Ausgestaltungen von Getrieben erfüllen diese Anforderungen immer nur teilweise, insbesondere ist das übertragbare Drehmoment zumeist sehr begrenzt, so dass sich die genannten Lösungen nicht für den Schwermaschinenbau eignen.

Um dem abzuhelfen, sind Getriebe der eingangs genannten Art bekannt geworden, die sowohl für eine Übertragung großer Drehmomente geeignet sind als auch ein hohes Übersetzungsverhältnis aufweisen. Ein solches Getriebe ist beispielsweise aus der DE 100 81 339 B4 bekannt. Um ein hohes Drehmoment bei großer Übersetzung übertragen zu können, sind hier stößelartige, radial verschiebliche Übertragungselemente vorgesehen, die im Betrieb von einer radial innenliegenden Kulissenbahn, die als exzentrische Kreisbahn ausgebildet ist, zyklisch radial verschoben werden. Die Übertragungselemente haben an ihrem radial äußeren Ende einen Wälzkörper, der in die Vertiefungen des Abtriebselements eingreift. Da mehr Vertiefungen als Übertragungselemente vorhanden sind, wird das Abtriebselement pro Umdrehung des Antriebselements um einen definierten Winkel verdreht. Aufgrund dieses Effekts kommt ein gewünschtes hohes Übersetzungsverhältnis zustande, wobei hohe Drehmomente übertragen werden können.

Eine ähnliche Lösung zeigt die DE 10 2006 042 786 B4.

Nachteilig ist bei diesen Getriebeausführungen, dass der konstruktive bzw. vorrichtungstechnische Aufwand recht hoch ist und die Getriebe entsprechend teuer sind. Bedingt ist dies durch die Vielzahl an stößelartigen und radial verschieblichen Übertragungselementen, für die jeweils eine präzise, aber dennoch leichtgängige Lagerung bereit gestellt werden muss.

Der Erfindung liegt daher die Aufgabe zugrunde, ein Getriebe der eingangs genannten Art so fortzubilden, dass bei weiter gegebener vorteilhafter kompakter Bauart ein großes Übersetzungsverhältnis gegeben ist, wobei es aber gleichzeitig möglich sein soll, einen ruhigen Lauf des Getriebes ohne hohen konstruktiven und apparativen Aufwand für die Lagerung der Komponenten zu erreichen.

Diese Aufgabe wird erfindungsgemäß durch die im kennzeichnenden Teil des unabhängigen Anspruchs angegebenen Merkmale gelöst.

Bevorzugt ist vorgesehen, dass das Antriebselement, als zumindest teilweise scheibenförmiges oder ringförmige Bauteil ausgebildet, im Bereich der Mittenebene angeordnet ist. Ferner kann das Abtriebselement hierbei zweiteilig ausgebildet sein, wobei die radial innen liegenden Flächen mit ihren Vertiefungen symmetrisch zur Mittenebene und mit axialem Abstand zu dieser angeordnet sind. Weiterhin können zwei Halteelemente symmetrisch zur Mittenebene und mit axialem Abstand zu dieser angeordnet sein.

Der Außendurchmesser der Rolle zum Abrollen auf der Kulissenbahn des Antriebselements ist dabei bevorzugt größer als der Außendurchmesser der Rollen zum Abrollen in den Vertiefungen des Abtriebselements.

Die Welle kann weiterhin axiale Lagermittel aufweisen, die die axiale Beweglichkeit der Welle begrenzen, wobei die axialen Lagermittel insbesondere durch mindestens eine Lagerscheibe gebildet werden, die zwischen den auf der Welle angeordneten Rollen angeordnet ist.

Jede Vertiefung im Abtriebselement besteht bevorzugt aus zwei gegensinnig angeordneten rampenartigen Flächen, die sich unter einem Winkel zur Umfangsrichtung erstrecken.

Die Anzahl von Übertragungselementen ist dabei bevorzugt um 1 niedriger als die Anzahl von Vertiefungen, was ein hohes Übersetzungsverhältnis liefert. Die Anzahl von Übertragungselementen wird mit Vorteil geradzahlig gewählt. Eine bevorzugte Ausführungsform sieht zwischen 12 und 36 Übertragungselemente vor.

Die Vertiefungen sind zumeist nach Art eines innenverzahnten Zahnrads ausgebildet, so dass die erwähnten beiden gegensinnig angeordneten rampenartigen Flächen zum Tragen kommen, die sich unter einem Winkel zur Umfangsrichtung erstrecken. Die rampenartigen Flächen sind dabei bevorzugt eben ausgebildet. Sie können über einen Verbindungsabschnitt mit zylindrischer Oberfläche miteinander verbunden sein. Der genannte Winkel beträgt bevorzugt zwischen 40° und 70°. Der Übergang zwischen den rampenartigen Flächen benachbarter Vertiefungen kann als spitzer Kamm ausgebildet sein.

Die Führungsnuten für die Übertragungselemente in den Halteelementen können als lineare Gleitführungen ausgebildet sein.

Die radial außen liegende Umfangsfläche des Antriebselements weist bevorzugt eine zylindrische Form auf, die exzentrisch zur Drehachse angeordnet ist.

Das Antriebselement ist mit Vorteil scheibenförmig ausgebildet, während das Abtriebselement ringförmig ausgebildet sein kann.

Das vorgeschlagene Getriebe kommt bevorzugt dort zum Einsatz, wo sehr hohe Drehmomente übertragen werden müssen, wobei zwischen der Antriebs- und der Abtriebswelle ein großes Übersetzungsverhältnis benötigt wird (Schwerlastgetriebe). Hierbei ist insbesondere an Anwendungen im Schwermaschinenbau gedacht, beispielsweise an Maschinen im Bereich der Stahlherstellung und Stahlverarbeitung. Als Beispiel sei der Antrieb einer Reckwalze in einem Walzwerk genannt.

Es ist mit dem beschriebenen Getriebe möglich, bei hohen Übersetzungsverhältnissen große Drehmomente zu übertragen. Von Vorteil ist bei der vorgeschlagenen Lösung insbesondere, dass ein abwälzender Bewegungsablauf der Getriebeelemente bei der Momentenübertragung ermöglicht wird, so dass auch bei der Übertragung großer Drehmomente kein nennenswerter Verschleiß auftritt.

Sehr vorteilhaft ist ferner, dass auch bei stoßartiger Belastung keine Schädigung der Komponenten des Getriebes zu befürchten ist.

Weiterhin ist ein Vorteil der vorgeschlagenen Lösung, dass das Getriebe sehr kompakt aufgebaut ist.

Die erfindungsgemäß vorgesehene Konzeption schafft vor allem den großen Vorteil, dass sich eine einfache und kostengünstige Konstruktion ergibt, da keine zusätzlichen Lagerelemente für die Lagerung der Übertragungselemente vorgesehen werden müssen. Vielmehr wird erreicht, dass durch die bevorzugte symmetrische Ausgestaltung der Übertragungselemente unter Nutzung der Wellenstruktur, d. h. insbesondere durch die symmetrische Anordnung der Rollen für den Antrieb, für die Abstützung und für den Abtrieb, bei Belastung des Getriebes kein äußeres Reaktionsmoment ergibt. Die Welle mit den hierauf gelagerten Rollen ist nämlich zwischen den Konturen für den Antrieb (Kulissenbahn), für den Abtrieb (Vertiefungen) und für die Führung (in der Führungsnut der Halteelemente) quasi eingespannt und zentriert. Auf zusätzliche Lagerelemente für die Welle mit ihren Rollen kann daher verzichtet werden. Lediglich die genannten axialen Lagermittel (in Form von Lager- oder Spurscheiben) - bevorzugt axial zwischen den Stütz- und Abtriebsrollen angeordnet - begrenzen die axiale Beweglichkeit bzw. das Axialspiel.

In vorteilhafter Weise hat somit die Bewegungsübertragung vom Antrieb auf den Abtrieb ausschließlich Wälzcharakter.

In der Zeichnung ist ein Ausführungsbeispiel der Erfindung dargestellt. Es zeigen:
- Fig. 1: die Seitenansicht eines Getriebes;
- Fig. 2: einen vergrößerten Ausschnitt aus der Darstellung nach Fig. 1; und
- Fig. 3: den Schnitt A-B gemäß Fig. 1 durch das Getriebe.

In den Figuren ist ein Getriebe 1 zum Einsatz im Schwermaschinenbau dargestellt, über das bei einem großen Übersetzungsverhältnis hohe Drehmomente übertragen werden können. Die Momentenübertragung erfolgt von einem Antriebselement 2 (an dem eine nicht dargestellte Antriebswelle drehfest angeordnet sein kann) auf ein Abtriebselement 3 (an dem eine nicht dargestellte Abtriebswelle drehfest angeordnet sein kann).

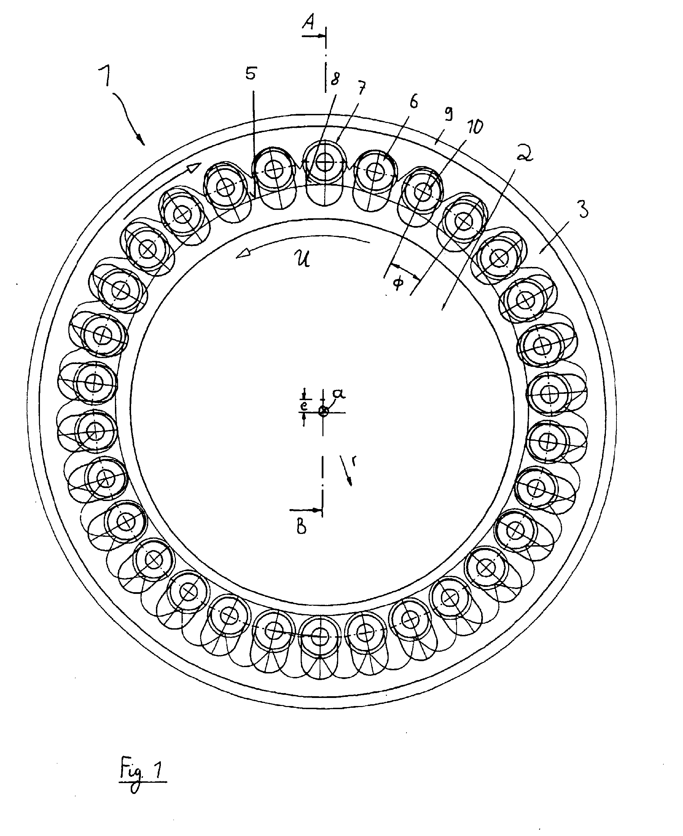

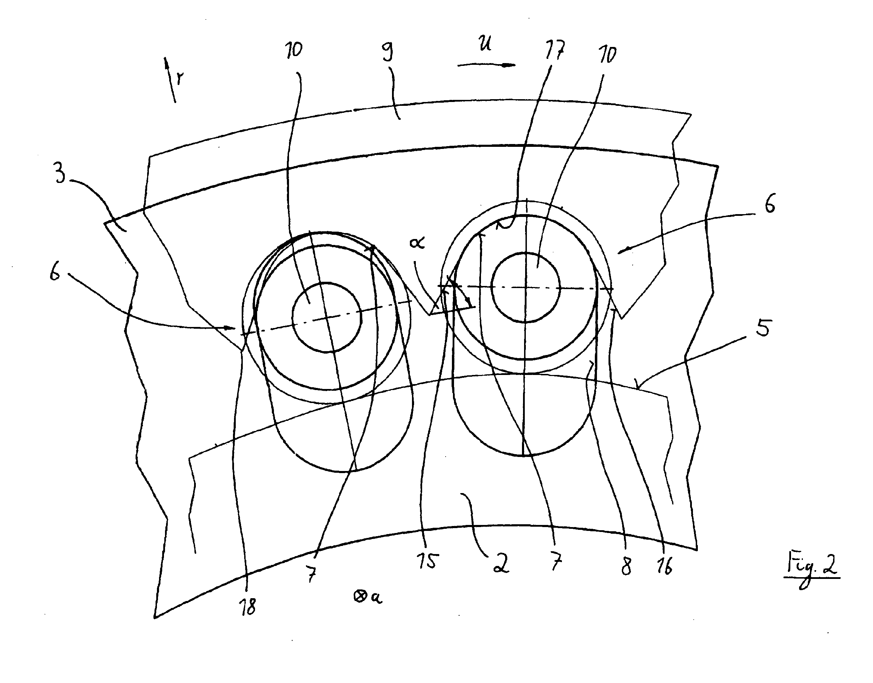

Das Antriebselement 2 und das Abtriebselement 3 drehen um eine Achse, die als axiale Richtung a eingezeichnet ist (diese Richtung steht in Fig. 1 und in Fig. 2 senkrecht auf der Zeichenebene).

Das Antriebselement 2 hat eine scheibenförmige Struktur, das Abtriebselement 3 ist ringförmig ausgebildet.

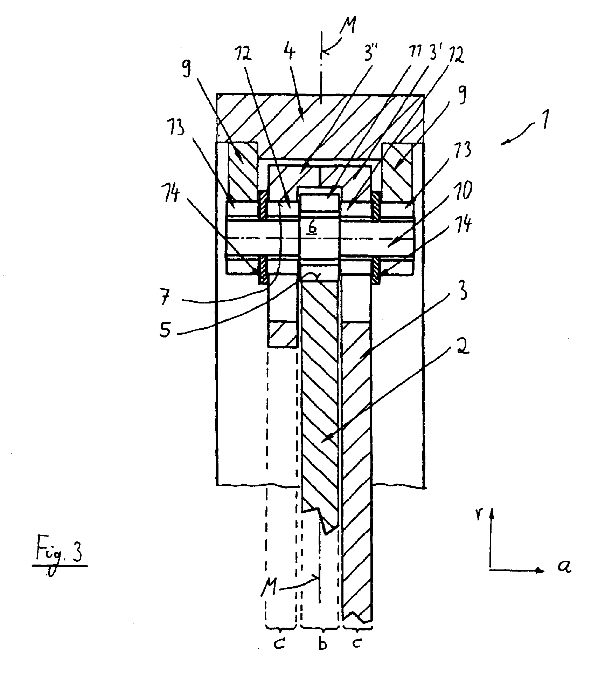

Nicht näher dargestellt ist, dass sowohl das Antriebselement 2 als auch das Abtriebselement 3 in einem Gehäuse 4 (s. Fig. 3) drehbar gelagert ist (die diesbezügliche Lagerung ist nicht dargestellt; sie ist standardgemäß ausgebildet).

Das Antriebselement 2 weist eine radial außen liegende Umfangsfläche 5 auf, die als Kulissenbahn für nachfolgend näher beschriebene Übertragungselemente 6 dient. Bei dieser Kulissenbahn 5 handelt es sich um eine (fast) kreisförmige Bahn, die mit einer Exzentrizität e zur Drehachse a verläuft (s. Fig. 1).

Im Inneren des Gehäuses 4 sind nahe den Stirnseiten (s. hierzu Fig. 3) zwei Halteelemente 9 befestigt. Jedes Halteelement 9 hat eine Anzahl Führungsnuten 8, die sich in radiale Richtung r erstrecken, wobei die Anzahl der Führungsnuten 8 der Anzahl n der Übertragungselemente 6 entspricht.

Das ringförmige Abtriebselement 3 besteht aus zwei Teilen (s. Fig. 3), nämlich aus einem scheibenförmigen Teil 3' und einem ringförmigen Teil 3", das drehfest mit dem Teil 3' verbunden ist.

In den Teilen 3', 3" sind an deren radial nach innen gerichteter Flächen bzw. Seiten Vertiefungen 7 nach Art eines innenverzahnten Zahnrades eingearbeitet. Die genaue Kontur der Vertiefungen 7 ist aus Fig. 2 ersichtlich.

Die Vertiefungen 7 erstrecken sich in Richtung der Drehachse a zumindest über die Breite der Teile 3', 3". Die in Fig. 2 dargestellte Ansicht - in Richtung der Drehachse a betrachtet - zeigt, dass jede Vertiefung 7 zwei symmetrische rampenartige ebene Flächen 15 und 16 aufweist, die über einen kreisbogenförmigen Verbindungsabschnitt 17 miteinander verbunden sind. Benachbarte Vertiefungen 7 stoßen an einem spitz ausgebildeten Kamm 18 zusammen. Der Winkel der rampenartigen Flächen 15, 16 zur Umfangsrichtung U ist mit α angegeben.

In den Führungsnuten 8 der beiden Halteelemente 9 ist eine Anzahl n Übertragungselemente 6 in radiale Richtung r translatorisch verschieblich angeordnet.

Der Aufbau der Übertragungselemente 6 geht am besten aus Fig. 3 hervor. Hiernach hat jedes Übertragungselement 6 eine Welle 10, auf der insgesamt fünf Rollen 11, 12 und 13 angeordnet sind.

Hierbei handelt es sich zunächst um eine Rolle 11, die in einer Mittenebene M angeordnet ist. Die Mittenebene M steht senkrecht auf der Achse a und bildet eine Symmetrieebene für das Übertragungselement 6. Die Rolle 11 dient zum Abrollen auf der radial außen liegenden Umfangsfläche 5 des Antriebselements 2, das - als scheibenförmiges Bauteil ausgebildet - ebenfalls in der Mittenebene M liegt.

Seitlich neben der Rolle 11 sind zwei Rollen 12 angeordnet, und zwar symmetrisch zur Mittenebene M. Diese beiden Rollen sind vorgesehen, in den Vertiefungen 7 abzurollen. Noch weiter von der Mittenebene M entfernt sind symmetrisch zwei Rollen 13 auf der Welle 10 gelagert, die dazu dienen das Übertragungselement 6 in den Führungsnuten 8 der Halteelemente 9 in radiale Richtung r zu führen.

Damit die Welle 10 mit ihren Rollen in axialer Richtung a festgelegt ist, sind zwei Lagerscheiben 14 - fungierend als axiale Lagermittel - zwischen den Rollen 12 und 13 befestigt.

Wesentlich ist, dass jedes Übertragungselement 6 eine sich in Richtung der Drehachse a erstreckende Welle 10 umfasst, wobei der erste Abschnitt b (s. Fig. 3) des Übertragungselements 6, der die Kulissenbahn 5 des Antriebselements 2 kontaktiert, und die seitlich benachbart angeordneten Abschnitte c des Übertragungselements 6, die die Vertiefungen 7 des Abtriebselements 3 kontaktieren, in Richtung der Drehachse a axial nebeneinander angeordnet sind.

Demgemäß wird die Welle 10 mit den auf ihr gelagerten fünf Rollen 11, 12 und 13 nicht durch irgendeine Art von Lagerung in ihrer Position gehalten, sondern die fünf als Kontaktstellen fungierenden Rollen halten die Welle 10 in der Arbeitsstellung.

Die Anzahl der Übertragungselemente 6 (n) ist um eins niedriger als die Anzahl (j) der Vertiefungen 7. Das bedeutet, dass bei der Umdrehung der Antriebswelle 2 um 360° die Übertragungselemente 6 um eine Vertiefung 7 in Umfangsrichtung U weiterwandern. Dies kann bei Betrachtung der Fig. 1 gesehen werden. Die Exzentrizität e, mit der das Antriebselement 2 zur Drehachse a gelagert ist, bewirkt, dass an einer Umfangsposition ein maximaler Hub und - um 180° versetzt - ein minimaler Hub gegeben ist, die zur Folge haben, dass die Übertragungselemente 6 bei großem Hub in die Vertiefungen 7 radial nach außen hineingedrückt und bei kleinem Hub bis zum Kamm 18 radial nach innen herausgedrückt werden.

Da eine Vertiefung 7 mehr als Übertragungselemente 6 vorhanden ist, kommt es zu dem genannten Wandern um eine Vertiefung bei 360° Drehung der Antriebswelle 2. Infolge der im Ausführungsbeispiel vorgesehenen 30 Übertragungselemente 6 bei 31 Vertiefungen 7 hat das Getriebe vorliegend also eine Übersetzung von 30 : 1 ins Langsame. Die Übertragungselemente sind also um einen Winkel φ in Höhe von 360° : 30 = 12° voneinander beabstandet (s. Fig. 1).

Dreht sich das Antriebselement 2 in Richtung des inneren Pfeils in Fig. 1 (entgegen dem Uhrzeigersinn), kommt es zu einer gegensinnigen Drehung des Abtriebselements 3 in Richtung des äußeren Pfeils in Fig. 1.

Die Wirkungsweise des vorgeschlagenen Getriebes kann noch einmal wie folgt zusammengefasst werden:

Ein horizontal bewegter flacher Keil hebt senkrecht zu seiner Bewegungsbahn eine Rolle in einer stationären linearen Führung an. Die Rolle verschiebt dabei einen senkrecht stehenden flachen Keil in horizontaler Richtung als Abtrieb. Diese An- und Abtriebsbewegungen auf eine Kreisbahn gebracht, erzeugen eine Drehbewegung, bei der die beiden Drehmittelpunkte identisch sind. Das Getriebe - und Übertragungselement (Welle samt Rollen) ist mit seiner Führung im Grundgestell mehrfach zentrisch zum Drehmittelpunkt angeordnet und übernimmt anteilig die Momenten- und Bewegungsübertragung.

Der Hub der Rollen wird durch eine exzenterähnliche Drehbewegung im Zentrum des Getriebes erzeugt. Die Hubbewegung beginnt mit der minimalen Exzentrizität der Antriebsscheibe und endet mit Erreichen der maximalen Exzentrizität. Pro Drehwinkel erfährt jede Rolle den gleichen anteiligen Hub. Über die fallende Flanke der exzenterähnlichen Drehbewegung erreicht jede Rolle nach Ablauf ihres Hubzyklus momentenlos die Ausgangsposition. Der Abtrieb erfolgt über den umlaufenden äußeren Ring mit seiner innenliegenden keilähnlichen Kontur.

Im Ausführungsbeispiel ist der Antriebsdrehwinkel in 180° für das Heben und in 180° für das Senken der Rollen bzw. Übertragungselemente aufgeteilt. Dadurch ergibt sich für den Abtrieb eine absolute Gleichförmigkeit des Bewegungsablaufs. Hierdurch überträgt somit maximal die Hälfte der Rollenanzahl die Bewegung, während die andere Hälfte auf ihre Ausgangslage zurückgestellt wird.

Wegen der gegensinnigen Drehbewegungen sind für die Einzelfunktionen "Antrieb", "Abstützen" und "Abtrieb" jeweils separate Rollen auf der Welle vorgesehen. Diese Rollen führen, da sie alle auf der Welle 10 sitzen, alle dieselbe Hubbewegung aus. Die Abtriebsrollen übertragen die Bewegung über radialsymmetrische Nuten in der Abtriebsscheibe, wobei der tangentiale Anteil der Bewegung die eigentliche Drehbewegung bewirkt.

Die Kontur der Abwälzbewegung für jede Rolle setzt sich aus einer Abstützkontur und einer Rückstellkontur zusammen. Bei einer Umdrehung der Antriebsscheibe (360°) durchläuft jede Rolle eine komplette Kontur bestehend aus Abstütz- und Rückstellkontur. Das Übersetzungsverhältnis ergibt sich durch den konstanten Teilungswinkel der Rollen am Umfang.

Folgendes Beispiel sei gegeben: Bei der Verwendung von beispielsweise 30 Übertragungselementen 6 und bei entsprechend 31 Vertiefungen 7 auf dem Umfang ergibt sich für einen kompletten Weitertransport der Antriebskontur, bezogen auf 360° des Antriebs, von einer Rolle zur nächsten Rolle: 360° : 30 = 12°. Das Übersetzungsverhältnis des Getriebes ist demgemäß i = 30.

Die Übersetzung des Getriebes ergibt sich somit ausschließlich durch die Anzahl der Übertragungselemente über dem Umfang. Diese ist lediglich durch die auf einem gegebenen Umfang unterzubringenden Übertragungselemente / Rollen und deren Durchmesser begrenzt. Das übertragbare Drehmoment wird nur durch die zulässige Flächenpressung für die Rolle und ihre Laufbahn begrenzt.

Durch die rein in der Ebene verlaufende Bewegung ergibt sich für die konstruktive Gestaltung dieses Getriebes ein scheibenähnlicher Aufbau. Das Antriebselement liegt im Zentrum des Getriebes. Im Zentrum des stationären Getriebegehäuses 4 ist die rotierende Antriebsscheibe 2 mit ihrer Kulissenbahn 5 angeordnet. Die beiden Stützringe 9 sind jeweils links und rechts der Antriebsscheibe 2 im Gehäuse 4 befestigt. Die Antriebsscheibe 2 mit den zentrisch zum Antriebsmittelpunkt verlaufenden Führungskonturen 8 als Bewegungsbahnen für die Abtriebsrollen 12 ist zwischen der Antriebsscheibe 2 und den stationären Stützringen 9 angeordnet. Jede Kontur dieser Konzeption weist eine eigene Rolle 11, 12, 13 als Übertragungselement auf. Alle Rollen einer Geometrieeinheit, bestehend aus Kurvenkontur 5, Stütz- und Rückstellkontur 7 und Führungskontur 8, sind auf einer gemeinsamen Rollenachse 10 (Welle) montiert.

Die Führung der Wellen 10 samt Rollen 11, 12, 13 kommt - wie erläutert - somit ohne separate Lagerungen aus.

Da es sich bei dieser Bauart um ein geschlossenes, abdichtbares System handelt, kann eine Schmierung auf Lebensdauer realisiert werden.

### Bezugszeichenliste:

- 1: Getriebe
- 2: Antriebselement
- 3: Abtriebselement
- 3': Teil des Abtriebselements
- 3": Teil des Abtriebselements
- 4: Gehäuse
- 5: radial außen liegende Umfangsfläche (Kulissenbahn)
- 6: Übertragungselement
- 7: Vertiefung
- 8: Führungsnut
- 9: Halteelement
- 10: Welle
- 11: Rolle
- 12: Rolle
- 13: Rolle
- 14: axiale Lagermittel (Lagerscheibe)
- 15: rampenartige Fläche
- 16: rampenartige Fläche
- 17: Verbindungsabschnitt
- 18: Kamm
- a: axiale Richtung
- r: radiale Richtung
- b: erster Abschnitt
- c: zweiter Abschnitt
- e: Exzentrizität
- M: Mittenebene
- U: Umfangsrichtung
- α: Winkel
- φ: Winkel

- n: Anzahl von Übertragungselementen
- j: Anzahl von Vertiefungen

## Patentansprüche

1. Getriebe (1) zur Übertragung eines Drehmoments von einem Antriebselement (2) auf ein Abtriebselement (3), wobei das Antriebselement (2) und das Abtriebselement (3) um eine gemeinsame Drehachse (a) rotieren, wobei das Antriebselement (2) und das Abtriebselement (3) in einem Gehäuse (4) drehbar gelagert sind,
wobei das Antriebselement (2) mindestens eine radial außen liegende Umfangsfläche (5) aufweist, die eine Kulissenbahn für mindestens einen ersten Abschnitt (b) einer Anzahl (n) an Übertragungselementen (6) bildet,
wobei das Abtriebselement (3) mindestens eine radial innen liegende Fläche aufweist, die mit einer Anzahl (j) gleichmäßig über den Umfang verteilt angeordneter Vertiefungen (7) versehen ist, die eine Kontaktfläche für mindestens einen zweiten Abschnitt (c) der Übertragungselemente (6) bilden,
wobei die Übertragungselemente (6) radial (r) verschieblich in Führungsnuten (8) mindestens eines Halteelements (9) angeordnet sind, das ortsfest an oder in dem Gehäuse (4) angeordnet ist,
wobei die Anzahl (n) von Übertragungselementen (6) und die Anzahl (j) von Vertiefungen (7) ungleich sind,
wobei jedes Übertragungselement (6) eine sich in Richtung der Drehachse (a) erstreckende Welle (10) umfasst, wobei der mindestens eine erste Abschnitt (b) und der mindestens eine zweite Abschnitt (c) des Übertragungselements (6) in Richtung der Drehachse (a) nebeneinander angeordnet sind,
und wobei jedes Übertragungselement (6) symmetrisch zu einer Mittenebene (M) ausgebildet ist, die senkrecht auf der Drehachse (a) steht,
**dadurch gekennzeichnet,**
**dass** auf der Welle (10) Rollen (11, 12, 13) angeordnet sind, die auf der Kulissenbahn (5) des Antriebselements (2) oder in den Vertiefungen (7) des Abtriebselements (3) oder in den Führungsnuten (8) des Halteelements (9) abrollen können, wobei auf der Welle (10) im Bereich der Mittenebene (M) eine Rolle (11) zum Abrollen auf der Kulissenbahn (5) des Antriebselements (2) angeordnet ist, wobei symmetrisch zur Mittenebene (M) zwei Rollen (12) zum Abrollen in den Vertiefungen (7) des Abtriebselements (3) angeordnet sind und wobei symmetrisch zur Mittenebene (M) zwei Rollen (13) zum Abrollen in den Führungsnuten (8) des Halteelements (9) angeordnet sind.

2. Getriebe nach Anspruch 1, **dadurch gekennzeichnet, dass** das Antriebselement (2), als zumindest teilweise scheibenförmiges oder ringförmige Bauteil ausgebildet, im Bereich der Mittenebene (M) angeordnet ist.

3. Getriebe nach Anspruch 1 oder 2, **dadurch gekennzeichnet, dass** das Abtriebselement (3) zweiteilig ausgebildet ist, wobei die radial innen liegenden Flächen mit ihren Vertiefungen (7) symmetrisch zur Mittenebene (M) und mit axialem Abstand zu dieser angeordnet sind.

4. Getriebe nach Anspruch 2 oder 3, **dadurch gekennzeichnet, dass** zwei Halteelemente (9) symmetrisch zur Mittenebene (M) und mit axialem Abstand zu dieser angeordnet sind.

5. Getriebe nach Anspruch 1, **dadurch gekennzeichnet, dass** der Außendurchmesser der Rolle (11) zum Abrollen auf der Kulissenbahn (5) des Antriebselements (2) größer ist als der Außendurchmesser der Rollen (12) zum Abrollen in den Vertiefungen (7) des Abtriebselements (3).

6. Getriebe nach einem der Ansprüche 1 bis 5, **dadurch gekennzeichnet, dass** die Welle (10) axiale Lagermittel (14) aufweist, die die axiale Beweglichkeit der Welle (10) begrenzen, wobei die axialen Lagermittel (14) durch mindestens eine Lagerscheibe gebildet werden, die zwischen den auf der Welle (10) angeordneten Rollen (11, 12, 13) angeordnet ist.

7. Getriebe nach einem der Ansprüche 1 bis 6, **dadurch gekennzeichnet, dass** jede Vertiefung (7) aus zwei gegensinnig angeordneten rampenartigen Flächen (15, 16) besteht, die sich unter einem Winkel (α) zur Umfangsrichtung (U) erstrecken.

## Claims

1. A transmission (1) for transmitting a torque from a drive element (2) to an output element (3), wherein the drive element (2) and the output element (3) rotate about a common axis of rotation (a), wherein the drive element (2) and the output element (3) are rotatably mounted in a housing (4), wherein the drive element (2) comprises at least one circumferential surface (5) located radially outside, which forms a crank path for at least one first portion (b) of a number (n) of transmission elements (6), wherein the drive element (3) comprises at least one surface located radially inside, which is provided with a number (j) of depressions (7) arranged evenly distributed over the circumference, which form a contact surface for at least one second portion (c) of the transmission elements (6)
wherein the transmission elements (6) are arranged radially (r) displaceably in guide slots (8) of at least one retaining element (9), which is arranged locationally fixed on or in the housing (4),
wherein the number (n) of transmission elements (6) and the number (j) of depressions (7) are uneven,
wherein each transmission element (6) comprises a shaft (10) extending in direction of the axis of rotation (a), wherein the at least one first portion (b) and the at least one second portion (c) of the transmission element (6) are arranged next to one another in the direction of the axis of rotation (a),
and wherein each transmission element (6) is formed symmetrically with respect to a centre plane (M), which stands perpendicularly on the axis of rotation (a),
**characterized**
**in that** on the shaft (10) rollers (11, 12, 13) are arranged, which can roll on the crank path (5) of the drive element (2) or in the depressions (7) of the output element (3) or in the guide slots (8) of the retaining element (9), wherein on the shaft (10) in the region of the centre plane (M) a roller (11) for rolling on the crank path (5) of the drive element (2) is arranged, wherein symmetrically with respect to the centre plane (M) two rollers (12) for rolling in the depressions (7) of the output element (3) are arranged and wherein symmetrically with respect to the centre plane (M) two rollers (13) for rolling in the guide slots (8) of the retaining element (9) are arranged.

2. The transmission according to claim 1, **characterized in that** the drive element (2) designed as an at least partially disc-like or annular component, is arranged in the region of the centre plane (M).

3. The transmission according to claim 1 or 2, **characterized in that** the drive element (3) is designed in two parts, wherein the surfaces located radially inside are arranged with their depressions (7) symmetrically to the centre plane (M) and axially spaced from the latter.

4. The transmission according to claim 2 or 3, **characterized in that** two retaining elements (9) are arranged symmetrically to the centre plane (M) and axially spaced from the latter.

5. The transmission according to claim 1, **characterized in that** the outer diameter of the roller (11) for rolling on the crank path (5) of the drive element (2) is greater than the outer diameter of the rollers (12) for rolling in the depressions (7) of the output element (3).

6. The transmission according to any one of the claims 1 to 5, **characterized in that** the shaft (10) comprises axial bearing means (14), which limit the axial movability of the shaft (10), wherein the axial bearing means (14) are formed through at least one bearing disc, which is arranged between the rollers (11, 12, 13) which are arranged on the shaft (10).

7. The transmission according to any one of the claims 1 to 6, **characterized in that** each depression (7) consists of two ramp-like surfaces (15, 16) arranged in opposite directions, which extend at an angle (α) with respect to the circumferential direction (U).

## Revendications

1. Transmission (1) pour transmettre un couple de rotation à partir d'un élément d'entraînement (2) sur un élément de sortie (3), dans laquelle l'élément d'entraînement (2) et l'élément de sortie (3) entrent en rotation autour d'un axe de rotation commun (a), dans laquelle l'élément d'entraînement (2) et l'élément de sortie (3) sont positionnés de manière rotative dans un logement (4),
dans laquelle l'élément d'entraînement (2) présente au moins une surface circonférentielle (5) située radialement à l'extérieur, qui forme une voie de coulisse pour au moins une première portion (b) d'une pluralité (n) d'éléments de transmission (6),
dans laquelle l'élément de sortie (3) présente au moins une surface située radialement à l'intérieur, qui est pourvue d'une pluralité (j) de cavités (7) réparties uniformément sur la circonférence, qui forment une surface de contact pour au moins une deuxième portion (c) des éléments de transmission (6),
dans laquelle les éléments de transmission (6) sont disposés radialement (r) de manière coulissante dans les rainures de guidage (8) d'au moins un élément de retenue (9), qui est disposé de manière stationnaire sur ou dans le logement (4),
dans laquelle la pluralité (n) d'éléments de transmission (6) et la pluralité (j) de cavités (7) ne sont pas identiques,
dans laquelle chaque élément de transmission (6) comprend un arbre (10) s'étendant dans la direction de l'axe de rotation (a), dans laquelle au moins une première partie (b) et au moins une deuxième portion (c) de l'élément de transmission (6) sont disposées côte à côte dans la direction de l'axe de rotation (a),
et dans laquelle chaque élément de transmission (6) est conçu symétriquement à un plan médian (M), qui se dresse perpendiculairement à l'axe de rotation (a),
**caractérisée en ce que** des rouleaux (11,12,13) sont disposés sur l'arbre (10), qui peuvent rouler sur la voie de coulisse (5) de l'élément d'entraînement (2) ou dans les cavités (7) de l'élément de sortie (3) ou dans les rainures de guidage (8) de l'élément de retenue (9), dans laquelle sur l'arbre (10) un rouleau (11) pour rouler sur la voie de coulisse (5) de l'élément d'entraînement (2) est disposé au niveau du plan médian (M), dans laquelle deux rouleaux (12) sont disposés symétriquement eu plan médian (M) afin de rouler dans les cavités (7) de l'élément de sortie (3) et dans laquelle deux rouleaux (13) sont disposés symétriquement au plan médian (M) afin de rouler dans les rainures de guidage (8) de l'élément de retenue (9).

2. Transmission selon la revendication 1, **caractérisée en ce que** l'élément d'entraînement (2), conçu comme un composant au moins partiellement en forme de disque ou en forme d'anneau, est disposé au niveau du plan médian (M).

3. Transmission selon la revendication 1 ou 2, **caractérisée en ce que** l'élément de sortie (3) est conçue en deux parties, dans laquelle les surfaces situées radialement à l'intérieur sont disposées avec leurs cavités (7) symétriques au plan médian (M) et avec un espacement par rapport à celui-ci.

4. Transmission selon les revendications 2 ou 3, **caractérisée en ce que** deux éléments de retenue (9) sont disposés symétriquement au plan médian (M) et avec un espacement axial par rapport à celui-ci.

5. Transmission selon la revendication 1, **caractérisée en ce que** le diamètre extérieur des rouleaux (11) pour rouler sur la voie de coulisse (5) de l'élément d'entraînement (2) est plus grand que le diamètre extérieur des rouleaux (12) pour rouler dans les cavités (7) de l'élément de sortie (3).

6. Transmission selon une des revendications 1 à 5, **caractérisée en ce que** l'arbre (10) présente des moyens de palier (14) axiaux, qui limitent la mobilité axiale de l'arbre (10), dans laquelle les moyens de palier axiaux (14) sont formés par au moins un disque de palier, qui est disposé entre les rouleaux (11,12,13) disposés sur l'arbre (10).

7. Transmission selon une des revendications 1 à 6, **caractérisée en ce que** chaque cavité (7) est constituée de deux surfaces en forme de rampe (15,16) disposées en sens contraire, qui s'étendent en formant un angle (α) par rapport à la direction circonférentielle (U).
